Europäisches Patentamt

(19) European Patent Office

Office européen des brevets

(11) Numéro de publication : **0 048 664**
**B1**

(12) **FASCICULE DE BREVET EUROPÉEN**

(45) Date de publication du fascicule du brevet :
**25.07.84**

(21) Numéro de dépôt : **81401433.8**

(22) Date de dépôt : **15.09.81**

(51) Int. Cl.³ : **C 02 F   1/72,** F 23 G   7/00,
C 01 B  17/96

(54) **Procédé de traitement d'une matière liquide conduisant à des déchets solides par action d'une phase fluide et d'au moins une phase gazeuse.**

(30) Priorité : **24.09.80 FR 8020464**

(43) Date de publication de la demande :
**31.03.82 Bulletin 82/13**

(45) Mention de la délivrance du brevet :
**25.07.84 Bulletin 84/30**

(84) Etats contractants désignés :
**AT CH DE FR GB IT LI LU SE**

(56) Documents cités :
**EP-A- 0 007 846**
**FR-A- 2 200 205**
**FR-A- 2 312 459**
**FR-A- 2 406 610**
**US-A- 3 897 007**

(73) Titulaire : **RHONE-POULENC CHIMIE DE BASE**
**25, quai Paul Doumer**
**F-92408 Courbevoie (FR)**

(72) Inventeur : **Prudhon, François**
**2, rue Delaunay**
**F-78000 Versailles (FR)**
Inventeur : **Scicluna, Augustin**
**118bis, avenue Victor Hugo**
**F-93300 Aubervilliers (FR)**

(74) Mandataire : **Martin, Henri et al**
**RHONE-POULENC RECHERCHES Service Brevets**
**Chimie et Polymères 25, quai Paul Doumer**
**F-92408 Courbevoie Cedex (FR)**

Jouve, 18, rue St-Denis, 75001 Paris, France

**0 048 664**

### Description

La présente invention a trait à un procédé de traitement d'une matière liquide renfermant des composés susceptibles de conduire par traitement physico-chimique à des déchets solides et application notamment au traitement des eaux résiduaires contenant des sels minéraux et/ou organiques à point de fusion éventuellement bas, tels que sulfures, sulfates, chlorures, etc.

On sait que le traitement des eaux résiduaires à des fins de dépollution est particulièrement difficile et complexe, et a donné lieu à de nombreuses propositions de solutions.

Ainsi a-t-on proposé des solutions par voie physico-chimique, comme celle préconisée dans le FR-A-2 320 268 qui consiste à mettre lesdites eaux en contact, à des pH inférieurs à 7 et à des températures comprises entre 20 et 200 °C avec de l'oxygène technique pur à une pression comprise entre la pression normale et 20 bars, jusqu'à ce que le sulfure soit converti en thiosulfates puis à transformer ces thiosulfates en sulfates par action de l'oxygène technique à un pH de 0 à 5, ou de 0 à 8 pour des eaux résiduaires ne contenant que des sulfates, à des températures de 20 à 200 °C, à des pressions pouvant aller jusqu'à 20 bars, et éventuellement en présence de catalyseurs.

Mais le simple énoncé du procédé en montre la complexité. C'est pourquoi dans le FR-A-2 406 610 on a proposé de soumettre lesdites eaux à une pulvérisation et un traitement thermique oxydant simultané. Selon ce brevet la mise en contact et le traitement peuvent être réalisés au moyen d'un contacteur-réacteur tel que décrit dans le FR-A-2 257 326 selon lequel on introduit au moins un fluide dans la zone de dépression d'un écoulement puits-tourbillon à grande quantité de mouvement.

Mais la solution ne s'est pas avérée suffisamment fiable sur le plan industriel, compte tenu des variations possibles, dans les effluents, des concentrations en dérivé du soufre.

On a observé des dépôts sur l'organe de réception.

On pense que cette difficulté vient en particulier de la présence de polysulfures. Bien que ceux-ci soient connus depuis longtemps, puisque mis en évidence par Scheele dès 1777, ils correspondent en général à un mélange de constituants. Il faut donc un traitement qui puisse éliminer ces composés et éventuellement d'autres.

Or maintenant on a trouvé, et c'est ce qui fait l'objet de la présente invention un procédé qui consiste à traiter une liqueur (17, 20) renfermant de l'eau et notamment des polysulfures organiques et minéraux par une autre matière réactive sous forme d'une phase fluide et traitement par co-pulvérisation par au moins une phase gazeuse, à une température comprise entre 600 et 1 200 °C avant la réaction, caractérisé par le fait que l'on traite la liqueur au moyen d'une solution d'acide chlorhydrique immédiatement avant le traitement par co-pulvérisation par la phase gazeuse, avantageusement dans un temps inférieur à 1 seconde avant la co-pulvérisation.

Avantageusement on amène la phase gazeuse sous forme d'un écoulement puits-tourbillon et on effectue une co-pulvérisation de la matière liquide à traiter et de la phase réactive par la phase gazeuse selon l'axe dudit écoulement puits-tourbillon dans la zone de dépression.

On observe alors de manière surprenante que non seulement la co-pulvérisation se fait bien alors que l'on aurait pu craindre la formation de composés indésirables, mais que l'on parvient à obtenir après traitement par la phase gazeuse une poudre bien séchée que l'on peut séparer par les moyens habituels.

L'invention constitue donc une rupture avec la démarche habituelle selon laquelle, pour se mettre dans les meilleures conditions concernant la pulvérisation, l'on se place si possible en dehors des conditions de réaction.

L'invention procure ainsi un moyen inattendu et imprévisible de contrôler la cinétique de réactions dans un tel milieu, et bien que lesdites réactions soient connues depuis longtemps.

Bien évidemment les conditions de débit et de température doivent être déterminées en fonction de la nature des solutions à traiter et la liqueur réactive traitante.

Dans le cas d'un traitement de dépollution la phase gazeuse est portée avant contact avec la phase liquide à une température élevée, de l'ordre de 600 à 1 200 °C. Les deux solutions constituant la phase liquide par contre peuvent être à température relativement basse, par exemple ambiante.

Comme dit précédemment dans le cas d'une matière liquide renfermant des sulfures et polysulfures la phase fluide réactive traitante est constituée par une solution d'acide chlorhydrique de manière à amener le pH de la phase liquide aux environs de 9.

Dans le cas d'un traitement à température élevée un procédé et dispositif bien adaptés sont conformes à ceux décrits dans la demande de brevet français 78/21650 (FR-A-2 431 321).

Un premier écoulement hélicoïdal symétrique sert à former un générateur de gaz chaud. Mais au lieu d'introduire ce gaz chaud de manière tangentielle à la périphérie comme phase gazeuse d'un écoulement puits-tourbillon, on introduit au contraire la phase liquide selon l'axe dudit écoulement puits-tourbillon sortant du générateur de gaz chaud.

Par ailleurs dans les installations de grandes tailles, et travaillant à fort débit il est également recommandé d'introduire la phase liquide sous forme pré-dispersée, en lui conférant notamment une configuration de cône, ou de tronc de cône. On peut avantageusement se servir du mouvement de rotation imparti à une des phases liquides, pour former la prédispersion.

Mais la présente invention sera plus aisément comprise à l'aide de l'exemple suivant donné à titre illustratif, mais nullement limitatif.

2

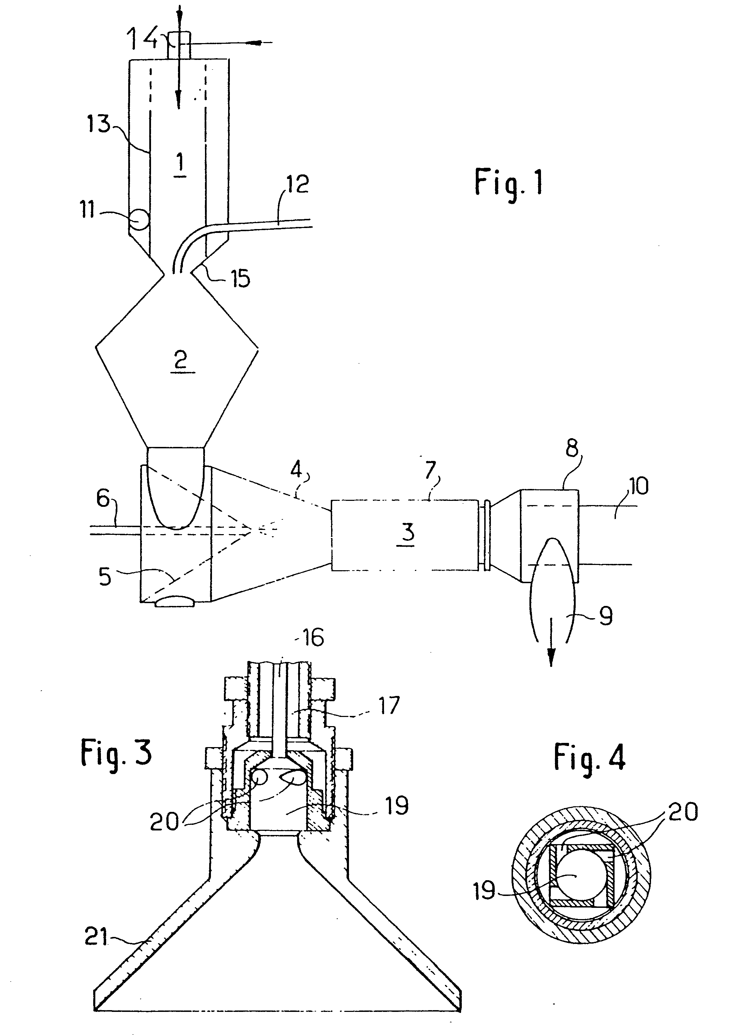

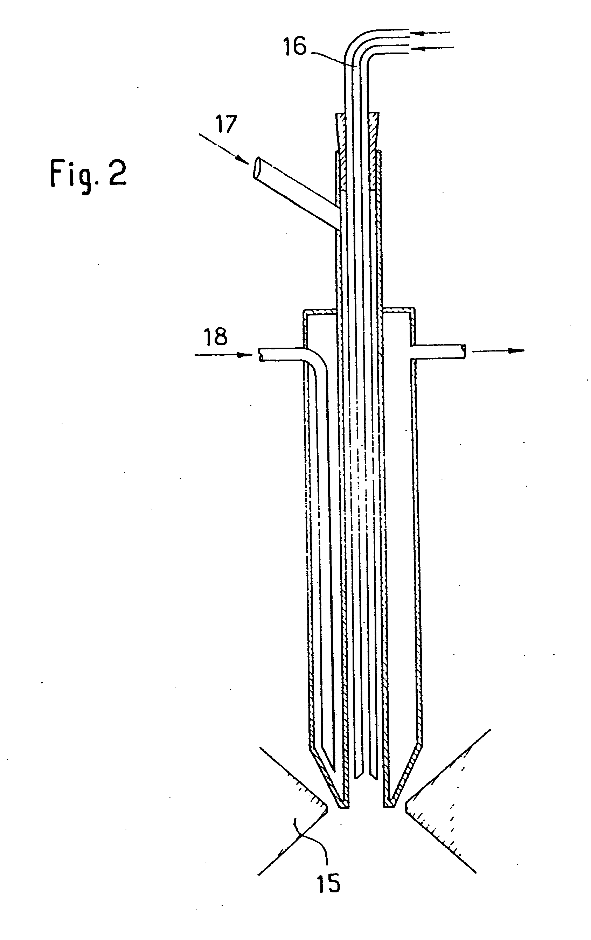

Le dispositif utilisé est illustré à la figure 1. Il comprend une chambre de combustion 1, un bicône de contact 2, un dispositif de mise hors poussière 3 comprenant une enveloppe 4 dans laquelle est disposé un cône de réception 5 juste en dehors du bicône 2, et éventuellement une amenée de liquide 6. Le tronc de cône 4 est prolongé par un cylindre 7 qui permet au mouvement de rotation de se conserver et qui conduit les produits jusqu'à un séparateur centrifuge 8. Le produit solide sort en 9 et le gaz en 10, où il pénètre éventuellement dans une tour de lavage non représentée.

Si l'on revient plus spécifiquement au procédé selon l'invention, le traitement de la liqueur à traiter a lieu en formant un écoulement puits-tourbillon grâce à un fluide introduit tangentiellement en 11 lequel prend l'allure d'un écoulement symétrique en passant par un cylindre perforé 13. Un carburant introduit par un conduit 14 permet de provoquer une réaction flamme à l'intérieur de 1. Un double conduit 12 permet d'introduire la phase liquide.

Un générateur de gaz chaud schématisé figure 1 se termine par une partie ou tronc de cône 15. A la figure 2 on a présenté schématiquement l'introduction des fluides et leur mise en contact.

Deux tubes axiaux 16 et 17 permettent d'amener respectivement le liquide réactif, HCl, et la liqueur à traiter. Eventuellement on peut prévoir un circuit de refroidissement 18. On voit que l'ensemble portant les tubes 16, 17 et 18 débouche sensiblement à la hauteur de la plus petite section du tronc de cône 15.

Selon un autre mode de réalisation spécialement adapté aux appareils de grande dimension, on réalise une pré-dispersion et un mélange intime des deux solutions liquides avant leur introduction dans la zone de dépression de l'écoulement du générateur de gaz chaud. Ce mode est illustré aux figures 3 et 4. Selon ce mode la solution d'HCl est introduite axialement dans une chambre 19 dans laquelle arrive tangentiellement, selon des ouvertures 20, la solution à traiter, le mélange passe ensuite dans un tronc de cône 21.

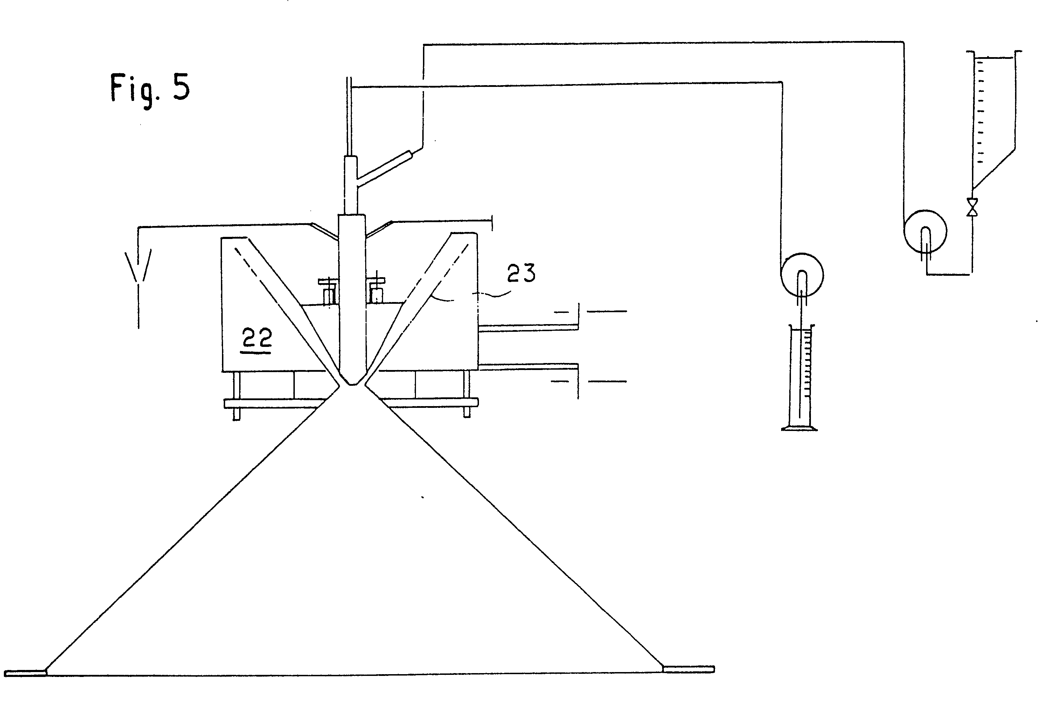

Enfin selon un autre mode de réalisation (figure 5) on peut mettre en œuvre une tête simple 22 comprenant une cheminée perforée tronconique 23 et un dispositif d'amenée des fluides selon la figure 2.

On met en œuvre un dispositif selon les figures 1, 3 et 4.

Le dispositif générateur 1 correspond à une capacité de 20 000 kg/h d'air.

Les solutions à traiter renferment :

— de l'eau
— des sulfures et polysulfures organiques et minéraux
— du NaCl
— des traces de matières organiques telles que huiles et alcools.

Le taux de matières sèches à 110 °C (à poids constant) est d'environ 30 %. .

Le réactif amené sous forme liquide est constitué par de l'acide chlorhydrique qui est co-pulvérisé avec la solution à traiter de manière à abaisser le pH de la solution.

Les autres conditions sont les suivantes :

$P_1$ relatif = pression au brûleur = 720 g/cm$^2$   0,7 $10^5$ Pa relatif
$P_2$ = pression de l'air à l'entrée du générateur 280 mm de pressions   Hg soit 0,4 $10^5$ Pa
$P_3$ = pression sur eaux sulfureuses = 0,6 $10^5$ Pa lues
$P_4$ = pression HCl = $10^5$ Pa
Débit en eaux sulfureuses   4 000 kg/h
Débit en HCl   200 kg/h de solution à 33 % en poids
$T_1$ = température générateur   850 °C
$T_2$ = bicône   450 °C

On recueille une poudre blanche à la sortie du dispositif qui correspond sensiblement à la composition suivante :

90 % NaCl
10 % Sulfate et des traces de sulfite.

On ne remarque aucune trace de collage sur les parois du bicône, alors que toutes choses égales par ailleurs si l'on n'opère pas d'après la co-pulvérisation selon l'invention il y a dépôt de matières sur lesdites parois.

L'exemple précédent, qui n'est pas limitatif de l'invention illustre parfaitement l'intérêt de l'invention qui répond à un besoin concernant à la fois les nécessités de non-pollution et d'économie d'énergie, de manière inattendue dans la mesure où elle correspond à une véritable rupture de démarche dans la façon d'appréhender ce genre de problème.

**Revendications**

1. Procédé de traitement d'une liqueur renfermant de l'eau et notamment des sulfures et polysulfures organiques et minéraux par une autre matière réactive, sous forme d'une phase fluide et traitement par co-pulvérisation par au moins une phase gazeuse, à une température comprise entre 600 et 1 200 °C avant la réaction, caractérisé par le fait que l'on traite la liqueur au moyen d'une solution d'acide chlorhydrique immédiatement avant le traitement par co-pulvérisation par la phase gazeuse.

2. Procédé selon la revendication 1, caractérisé par le fait que le traitement par la phase aqueuse est réalisé dans un temps inférieur à 1 seconde avant la co-pulvérisation.

3. Procédé selon l'une des revendications 1 et 2, caractérisé par le fait que l'on amène la phase gazeuse sous forme d'un écoulement puits-tourbillon et que l'on effectue une co-pulvérisation de la matière liquide à traiter et de la phase réactive par la phase gazeuse selon l'axe dudit écoulement puits-tourbillon dans sa zone de dépression.

4. Procédé selon l'une des revendications 1 à 3, caractérisé par le fait que l'on forme un générateur de gaz chaud grâce à un écoulement hélicoïdal symétrique et que l'on introduit la phase liquide selon l'axe dudit écoulement à la sortie du générateur de gaz chaud.

5. Procédé selon l'une des revendications 1 à 4, caractérisé par le fait que l'on pré-disperse la phase liquide avant son contact avec la phase gazeuse.

## Claims

1. A process for treatment of a liquor containing water and in particular organic and inorganic sulphides and polysulphides, with another reactive material, in the form of a fluid phase, and treatment by co-spraying by at least one gaseous phase, at a temperature of from 600 to 1 200 °C before the reaction, characterised in that the liquor is treated by means of a solution of hydrochloric acid immediately before the treatment by co-spraying by the gaseous phase.

2. A process according to claim 1, characterised in that the treatment with the aqueous phase is carried out in a time of less than one second before the co-spraying step.

3. A process according to one of claims 1 and 2, characterised by introducing the gaseous phase in the form of an axial spinning flow configuration and by effecting co-spraying of the liquid material to be treated and the reactive phase by the gaseous phase along the axis of said axial spinning flow configuration in the depression region thereof.

4. A process according to one of claims 1 to 3, characterised by forming a hot gas generator by virtue of a symmetrical helical flow and introducing the liquid phase along the axis of said flow at the outlet of the hot gas generator.

5. A process according to one of claims 1 to 4, characterised by pre-dispersing the liquid phase before contact thereof with the gaseous phase.

## Ansprüche

1. Verfahren zur Behandlung einer Flüssigkeit, die Wasser und vor allem organische und anorganische Sulfide und Polysulfide enthält, mit einem anderen reaktionsfähigen Material in Form einer fließfähigen Phase und Behandlung durch gemeinsames Zerstäuben durch mindestens eine Gasphase bei einer Temperatur von 600 bis 1 200 °C vor der Reaktion, dadurch gekennzeichnet, daß man die Flüssigkeit mit einer Salzsäurelösung unmittelbar vor der Behandlung durch gemeinsames Zerstäuben durch die Gasphase behandelt.

2. Verfahren nach Anspruch 1, dadurch gekennzeichnet, daß die Behandlung mit der wäßrigen Phase weniger als 1 Sekunde vor dem gemeinsamen Zerstäuben durchgeführt wird.

3. Verfahren nach Anspruch 1 oder 2, dadurch gekennzeichnet, daß man die Gasphase in Form einer Schacht-Wirbelströmung zuführt und ein gemeinsames Zerstäuben der Flüssigkeit, die behandelt werden soll, und der reaktionsfähigen Phase durch die Gasphase entlang der Achse der Schacht-Wirbelströmung in ihrer Unterdruckzone vornimmt.

4. Verfahren nach einem der Ansprüche 1 bis 3, dadurch gekennzeichnet, daß man einen Heißgasgenerator bildet dank einer symmetrischen schraubenförmigen Strömung und daß man die flüssige Phase entlang der Achse dieser Strömung am Ausgang des Heißgasgenerators einführt.

5. Verfahren nach einem der Ansprüche 1 bis 4, dadurch gekennzeichnet, daß man die flüssige Phase vor ihrer Berührung mit der Gasphase vordispergiert.

Fig. 1

Fig. 3

Fig. 4

Fig. 2

16

17

18

15

Fig. 5

22

23

0 048 664